# EUROPÄISCHE PATENTSCHRIFT

(11) **EP 0 812 994 B1**
(45) Veröffentlichungstag und Bekanntmachung des Hinweises auf die Patenterteilung: **24.03.2004**
(21) Anmeldenummer: 97106965.3
(22) Anmeldetag: 26.04.1997
(51) Int. Cl.: F16C 13/00

(54) **Durchbiegungseinstellwalze**
Deflection compensation roll
Rouleau avec compensation de la déflection

(30) Priorität: 13.06.1996 DE 19623652
(43) Veröffentlichungstag der Anmeldung: 17.12.1997
(73) Patentinhaber: Voith Paper Patent GmbH, 89522 Heidenheim (DE)
(72) Erfinder: Grabscheid, Joachim, Dr., 89547 Heuchlingen (DE); Schiel, Christian, 89520 Heidenheim (DE)

(56) Entgegenhaltungen:
- EP-A- 0 225 827
- EP-A- 0 384 173
- DE-A- 2 550 366
- DE-A- 3 528 333
- DE-A- 4 420 104
- DE-C- 3 815 462

## Beschreibung

Die Erfindung betrifft eine Durchbiegungseinstellwalze mit einem umlaufenden Walzenmantel, einem den Walzenmantel axial durchsetzenden Joch und mehreren in Axialrichtung der Walze mit Abstand nebeneinanderliegenden hydrostatischen und / oder hydrodynamischen Stützelementen, durch die der Walzenmantel am Joch unter Ausbildung eines dazwischenliegenden Fluidpolsters abgestützt ist, wobei eine Flüssigkeitsabführeinrichtung vorgesehen ist, um Betriebsfluid, insbesondere Schmiermittel, das sich im Betrieb im Walzeninneren sammelt und einen die Stützelemente umströmenden Fluidring am Innenumfang des Walzenmantels bildet, aus dem Walzeninneren zu entfernen.

Bei einer solchen Durchbiegungseinstellwalze muß das beispielsweise über die Stützelemente zugeführte Betriebsfluid, insbesondere Öl, wieder aus dem Walzeninneren abgeführt werden. Bei einer Verwendung der Durchbiegungseinstellwalze als Unterwalze kann das Fluid durch die obenliegenden Stützelementen von der Innenfläche des Walzenmantels abgeschabt und schwerkraftunterstützt ausgetragen werden. Bei einer Verwendung der Durchbiegungseinstellwalze als oberwalze mit untenliegenden Stützelementen ist dies nicht möglich, und deshalb ist bei einer aus der DE 25 50 366 A1 bekannten, als Oberwalze verwendeten Durchbiegungseinstellwalze ein Schöpfring vorgesehen, der zwischen dem Joch und einem Endabschnitt des Walzenmantels angeordnet ist.

Die DE 38 15 462 C zeigt eine weitere Durchbiegungseinstellwalze der obengenannten Art, bei der an den Stützelementen beidseitig rechteckige Stegteile vorgesehen sind, die seitlich von dem jeweiligen stützelement in Richtung eines benachbarten Stützelements abragen und die die zwischen den stützelementen gebildeten Strömungskanäle verengen.

Problematisch bei den bisher bekannten Durchbiegungseinstellwalzen ist insbesondere, daß sich in der Walze relativ dicke Ölringe bilden können, die wiederum hohe Planschleistungsverluste mit sich bringen, die insbesondere bei der Umströmung der Stützelemente auftreten.

Aufgabe der Erfindung ist es, eine Durchbiegungseinstellwalze der eingangs genannten Art zu schaffen, bei der auf einfache und zuverlässige Weise die im Walzeninnern enthaltene Fluidmenge und entsprechend die damit einhergehenden Planschleistungsverluste auf ein Minimum herabgesetzt werden können.

Diese Aufgabe wird erfindungsgemäß dadurch gelöst, daß zu der Flüssigkeitsabführeinrichtung mehrere an den Stützelementen ausgebildete Fluidabstreifelemente gehören, die seitlich von dem jeweiligen Stützelement in Richtung eines benachbarten Stützelements abragen und in den zwischen den Stützelementen gebildeten Strömungskanälen das die Stützelemente umströmende Fluid vom Walzenmantel abstreifen und daß nachdem sich bei einer Verwendung der Durchbiegungseinstellwalze als Oberwalze und als Unterwalze in ein- und derselben Maschine in der Regel unterschiedliche Drehrichtungen für den Walzenmantel ergeben, die Fluidabstreifelemente zumindesk teilweise derart angeordnet und / oder ausgebildet, sind, daß sie nur bei einer Drehung des Walzenmantels in einer Richtung wirksam sind, während sie bei sich in der entgegengesetzten Richtung drehendem Walzenmantel im wesentlichen unwirksam bleiben.

Bei dieser Ausbildung wirken die Stützelemente und die an ihnen vorgesehenen Fluidabstreifelemente gezielt auf das vom Walzenmantel mitgenommene und die Stützelemente umströmende Fluid, wobei durch die Fluidabstreifelemente die abstreifbare Ölmenge optimiert wird, so daß die im Walzeninneren enthaltene Fluidmenge auf ein Minimum reduziert und damit die an der Walzeninnenfläche gebildeten Fluidfilmschichten hinreichend dünn gehalten werden kann und entsprechend die beim Umströmen der Stützelemente auftretenden Planschleistungsverluste gering sind.

Gemäß einer bevorzugten Ausführungsform sind die Fluidabstreifelemente zumindest teilweise derart angeordnet und / oder ausgebildet, daß sie nur bei einer Verwendung der Durchbiegungseinstellwalze als Unterwalze wirksam sind, d.h. wenn die Stützelemente und damit die Fluidabstreifelemente in der oberen Walzenhälfte liegen, während sie bei einer Verwendung der Durchbiegungseinstellwalze als Oberwalze, d.h. wenn die Stützelemente und damit die Fluidabstreifelement in dem sich am Walzenboden bildenden Ölsumpf liegen, unwirksam bleiben.

Hierzu sind die Stützelemente einfacherweise rundlich ausgebildet und ragen die vorzugsweise klingenförmig ausgebildeten Fluidabstreifelemente jeweils etwa radial von den Stützelementen ab, wobei sie jeweils in dem dem umströmenden Fluidring zugewandten vorderen Bereich der Stützelemente liegen und dem Fluidring entgegengerichtet sind, wenn sie wirksam sind, und jeweils in dem dem umströmenden Fluidring abgewandten hinteren Bereich der Stützelemente liegen und in Strömungsrichtung des Fluids gerichtet sind, wenn sie unwirksam sind.

In vorteilhafter Weise können die Spitzen der Fluidabstreifelemente mit dem jeweiligen Stützelement jeweils durch einen etwa horizontalen Steg verbunden sein, um den Strömungswiderstand der Fluidabstreifelemente zu verringern, wenn sie unwirksam sind. Dabei erstrecken sich die Stege zweckmäßigerweise jeweils von den Spitzen der Fluidabstreifelemente bis in den Bereich der parallel zu Walzenachse verlaufenden Mittelachse der Stützelemente.

Gemäß einer bevorzugten Ausführungsform ist vorgesehen, daß an den Stützelementen jeweils zwei Fluidabstreifelemente auf gegenüberliegenden Seiten und insbesondere symmetrisch zu der quer zur Walzenachse verlaufenden Mittelachse des jeweiligen Stützelements ausgebildet sind.

Um die Fluidringe, die dadurch entstehen, daß vom Walzenmantel mitgenommenes Fluid die Stützelemente umströmt, auch dann gezielt abzustreifen, wenn die Fluidabstreichelemente unwirksam sind, sind am Innenumfang des Walzenmantels über dessen axiale Länge verteilt Schaberelemente vorgesehen sind, die bezüglich der Stützelemente auf Lücke angeordnet sind. Bei dieser Ausbildung wirken die Fluidabstreifelemente gezielt auf die diskreten Fluidringe, die dadurch entstehen, daß vom Walzenmantel mitgenommenes Fluid die Stützelemente umströmt. Damit läßt sich die im Walzeninneren enthaltene Fluidmenge auf ein Minimum reduzieren. Gleichzeitig werden die Reibungsverluste gering gehalten. Diese sind insbesondere im Vergleich zu denen einer durchgehenden Abstreifklinge deutlich herabgesetzt.

Gemäß einer bevorzugten Ausführungsform ist dabei die axiale Länge der Schaberelemente größer als der Abstand zwischen den Stützelementen, wodurch die diskreten Fluidringe, die nach dem Verlassen der zwischen den Stützelementen gebildeten Strömungskanäle etwas breiter werden, über ihre volle Breite vom Walzenmantel abnehmen zu können. Die Schaberelemente können aber auch aktiv sein, wenn die Fluidabstreifelemente wirksam sind, um auch die zwischen den wirksamen Fluidabstreifelementen noch durchströmenden schmalen Fluidringe vom Innenumfang des Walzenmantels abzustreifen.

Bei einer in der Praxis bevorzugten Ausführungsform ist den Fluidabstreifelementen und / oder den Schaberelementen wenigstens eine Fluidaufnahme für einen schwerkraftunterstützten Fluidaustrag zugeordnet. Damit kann eine relativ aufwendige Fluidabsaugung entfallen.

Außerdem kann den Fluidabstreifelementen und / oder den Schaberelementen wenigstens ein Luftablenkblech vorgeschaltet sein, das mit dem Walzenmantel einen Spalt bildet, der so bemessen ist, daß vom Walzenmantel mitgerissenes Betriebsfluid hindurchgeht, jedoch nur wenig Grenzschichtluft, die innerhalb des Betriebsfluids vom Walzenmantel mitgerissen wird. Hierdurch wird erreicht, daß das von den Fluidabstreifelementen bzw. den Schaberelementen abgestriffene Fluid ruhig abfließen kann und nicht durch die vom Walzenmantel mitgerissene Luft verwirbelt wird. Dies wird schon erreicht, wenn der Spalt nur wenige mm hoch ist.

Hinsichtlich weiterer vorteilhafter Ausführungsvarianten der erfindungsgemäßen Durchbiegungseinstellwalze wird auf die Unteransprüche sowie die nachfolgende Beschreibung von Ausführungsbeispielen unter Bezugnahme auf die Zeichnung verwiesen. In der Zeichnung zeigt:
- Figur 1: eine vereinfachte schematische Schnittdarstellung einer als Unterwalze verwendeten Durchbiegungseinstellwalze,
- Figur 2: eine vereinfachte schematische Schnittdarstellung einer als Oberwalze verwendeten Durchbiegungseinstellwalze,
- Figur 3: in vergrößerter Draufsicht ein Stützelement einer erfindungsgemäßen Durchbiegungseinstellwalze;
- Figur 4: eine Draufsicht auf die abgewickelte Innenfläche des Walzenmantels der in Figur 1 gezeigten Durchbiegungseinstellwalze,
- Figur 5: in vereinfachter schematischer Schnittdarstellung eine weitere Ausführungsform einer als Oberwalze verwendeten Durchbiegungseinstellwalze und
- Figur 6: in Draufsicht ein Stützelement der in Figur 5 dargestellten Durchbiegungseinstellwalze mit vorgeschaltetem Luftablenkblech.

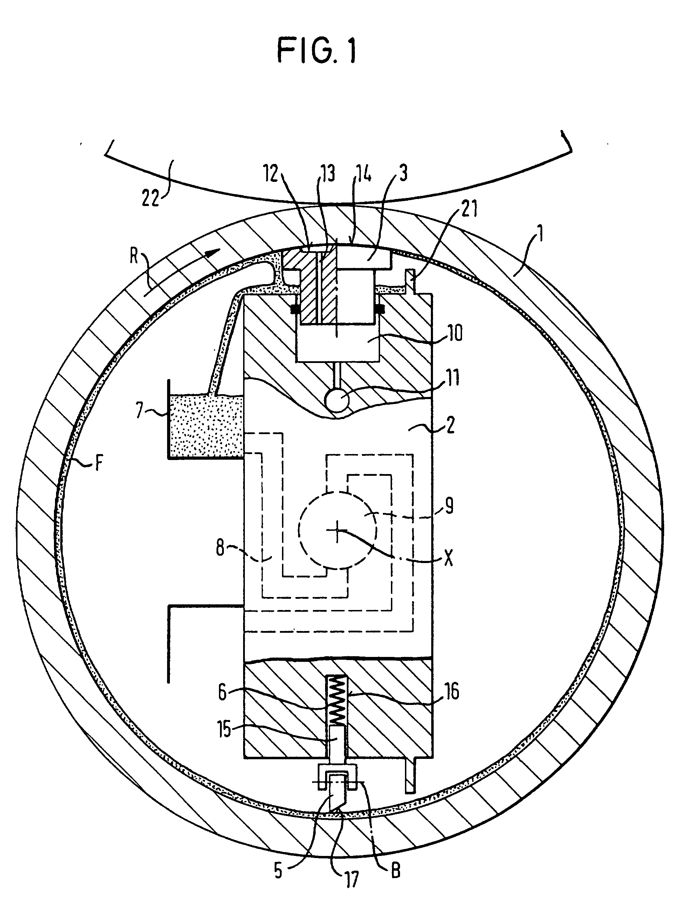

Figur 1 zeigt in schematischer Querschnittsdarstellung eine Durchbiegungseinstellwalze gemäß der vorliegenden Erfindung. Diese umfaßt einen umlaufenden Walzenmantel 1, ein den Walzenmantel 1 axial durchsetzendes Joch 2 und mehrere in Axialrichtung der Walze mit Abstand a nebeneinanderliegend angeordnete hydrostatische und / oder hydrodynamische Stützelemente 3, durch die Walzenmantel 1 am Joch 2 unter Ausbildung eines dazwischenliegenden Fluidpolsters abgestützt und unter Bildung eines Preßspalts radial gegen eine Gegenwalze 22 anpreßbar ist.

Die Stützelemente 3 sind jeweils kolbenförmig ausgebildet und dichtend in Druckkammern 10 eingesetzt, die in dem Joch 2 ausgebildet sind und über eine Versorgungsleitung 11 mit Druckfluid versorgt werden, um die Stützelemente 3 gegen die Innenfläche des Walzenmantels 1 zu drücken.

Die Stützelemente 3 besitzen jeweils eine walzenmantelseitige Gleitfläche 14, in der hydraulische Drucktaschen 12 ausgebildet sind, die über Leitungen 13 mit der jeweiligen Druckkammer 10 verbunden sind und durch diese gespeist werden.

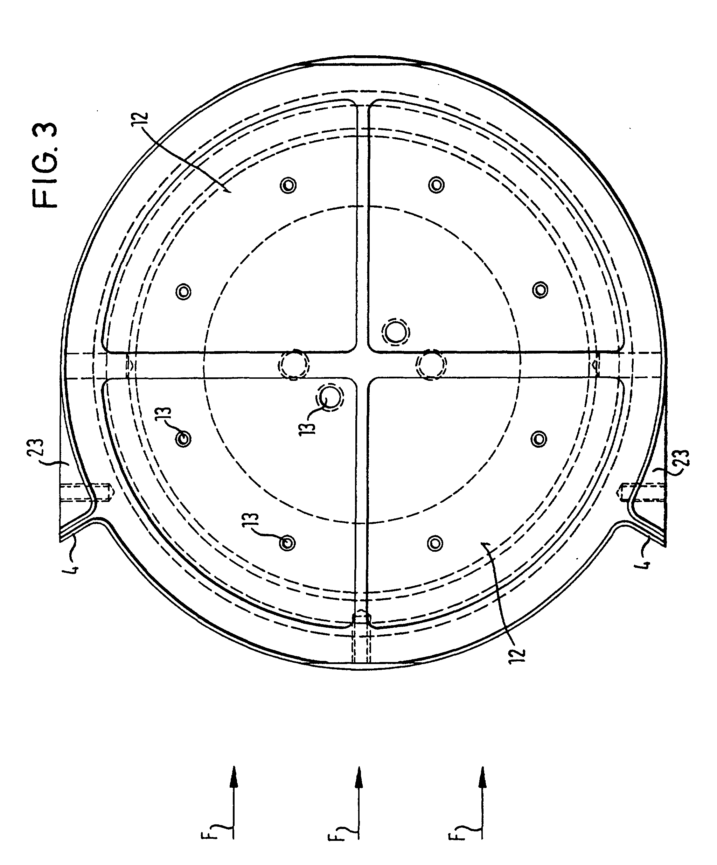

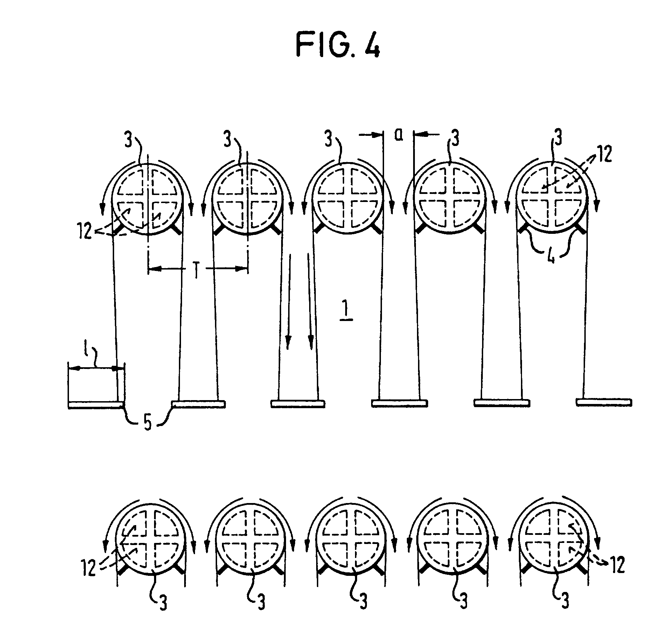

Wie in den Figuren 3 und 4 erkennbar ist, sind am runden Außenumfang der Stützelemente 3 jeweils zwei Fluidabstreichelemente 4 symmetrisch zur quer zur Walzenachse X verlaufenden Mittelachse des jeweiligen Stützelements 3 ausgebildet. Die Fluidabstreifelemente 4 ragen jeweils seitlich von den Stützelementen 3 ab und erstrecken sich in die zwischen den nebeneinanderliegenden Stützelementen 3 gebildeten Strömungskanäle hinein, um gezielt in den Strömungskanälen das die Stützelemente 3 umströmende Betriebsfluid von der Innenfläche des Walzenmantels 1 abzustreifen.

Dabei sind die Fluidabstreifelemente 4 derart ausgebildet, daß sie nur bei einer Drehung des Walzenmantels 1 in einer Richtung wirksam sind, während sie bei sich in der entgegengesetzten Richtung drehendem Walzenmantel 1 im wesentlichen unwirksam bleiben.

Dazu sind die Fluidabstreifelemente 4 klingenförmig ausgebildet und ragen jeweils etwa radial von den Stützelementen 3 ab wobei sie jeweils in dem dem Fluidstrom F zugewandten vorderen Bereich der Stützelemente 3 liegen und dem vom Walzenmantel 1 mitgerissenen Fluidstrom F entgegengerichtet sind, wenn sie wirksam sind, wie dies in Figur 3 angedeutet ist.

Wenn die Stützelemente 3 aus der entgegengesetzten Richtung angeströmt werden, liegen dann die Fluidabstreifelemente 4 jeweils in dem dem umströmenden Fluid F abgewandten hinteren Bereich der Stützelemente 3 und sind in Strömungsrichtung des Fluids F gerichtet, wie dies in Figur 4 gezeigt ist, so daß sie einen geringen Strömungswiderstand bieten und daher unwirksam sind.

Um den Strömungswiderstand hierbei so gering wie möglich zu halten und die relativ schmalen Fluidabstreifelemente 4 zu verstärken, sind die Spitzen der Fluidabstreifelemente mit dem Stützelement 3 durch jeweils einen etwa in Strömungsrichtung verlaufenden Verstärkungssteg 23 verbunden, der von den Spitze des Fluidabstreifelements 4 ausgehend etwa tangential an den Umfang des Stützelementes 3 anschließt.

Bei der in Figur 1 dargestellten Unterwalze sind die Fluidabstreifelemente 4 dem vom Walzenmantel 1 mitgerissenen Fluid F entgegengerichtet und damit wirksam, so daß das die Stützelemente 3 umströmende Fluid F von der Innenfläche des Walzenmantels 1 abgeschabt wird. Das abgestreifte Fluid F wird in einer seitlich am Joch 2 angebrachten Fluidaufnahme 7 aufgefangen und über eine Abführleitung 8 und eine zentrale Austragsleitung 9 aus der Walze herausgeführt.

An der den Stützelementen 3 gegenüberliegenden Unterseite des Jochs 2 sind mehrere, über die axiale Länge des Walzenmantels 1 verteilte Schaberelemente 5 vorgesehen. Diese sind, wie insbesondere in Figur 4 gut erkennbar ist, bezüglich der Stützelemente 3 auf Lücke angeordnet, um Fluid, das zwischen den Stützelementen 3 durchströmt und dabei kanalisiert wird, vom Innenumfang des Walzenmantels 1 abzustreifen.

Dabei ist die axiale Länge l der gegenüber den Stützelementen 3 um eine halbe Teilung T der Stützelementenanordnung versetzten Schaberelemente 5 im vorliegenden Fall etwas größer als der Abstand a zwischen den Stützelementen 3, um die diskreten Fluidringe, die nach dem Verlassen der zwischen den Stützelementen 3 gebildeten Kanäle etwas breiter werden, über ihre volle Breite von dem Walzenmantel 1 abnehmen zu können.

Die Schaberelemente 5 sind wie die Fluidabstreifelemente 4 derart ausgebildet, daß sie nur in einer Drehrichtung des Walzenmantels 1 wirksam sind, nämlich dann, wenn die an den Stützelementen 3 vorgesehenen Fluidabstreifelemente 4 unwirksam sind, um dann anstelle der Fluidabstreifelemente 4 die zwischen den Stützelementen 3 an der Innenfläche des Walzenmantels gebildeten Fluidringe vom Walzenmantel 1 abstreifen zu können.

Bei der dargestellten Ausführungsform wird das Schaberelement 5 durch Federkraft gegen die Innenfläche des Walzenmantels 1 gepreßt. Hierzu ist das klingenartig ausgebildete Schaberelement 5 vorzugsweise um eine zur Walzenachse X senkrechte Achse B schwenkbar an einem Stößel 15 befestigt, der in einer im Joch 2 vorgesehenen Aufnahme 16 radial zum Walzenmantel verschiebbar geführt ist. In die Aufnahme 16 ist eine Druckfeder 6 eingesetzt, durch die das Schaberelement 2 gegen die Innenfläche des Walzenmantels 1 gepreßt wird.

Die Schaberelemente 5 sind jeweils mit einer der Innenfläche des Walzenmantels 1 zugewandten Schrägfläche 17 versehen, durch die sich zwischen dem Innenumfang des Walzenmantels 1 und dem jeweiligen, gegen diesen gehaltenen Schaberelement 5 ein Keilspalt ergibt. Damit sind die Schaberelemente 5 nur bei sich in einer Richtung R drehendem Walzenmantel 1 wirksam, während sie bei sich in der entgegengesetzten Richtung drehendem Walzenmantel 1 aufgrund des durch den Keilspalt bewirkten hydrodynamischen Effekts Fluid durchlassen.

Bei der in Figur 1 dargestellten und die Unterwalze einer Preßvorrichtung bildenden Durchbiegungseinstellwalze, bei der sich der Walzenmantel in der mit "R" bezeichneten Richtung dreht, sind die an den Stützelementen 3 vorgesehenen Fluidabstreifelemente 4 wirksam und streifen das die Stützelemente 3 umströmende Fluid von der Innenfläche des Walzenmantels 1 ab. Dabei sind die Schaberelemente 5 unwirksam und lassen aufgrund des durch den Keilspalt zwischen der Schrägfläche 17 und dem Walzenmantel 1 bewirkten hydrodynamischen Effekts Fluid durch.

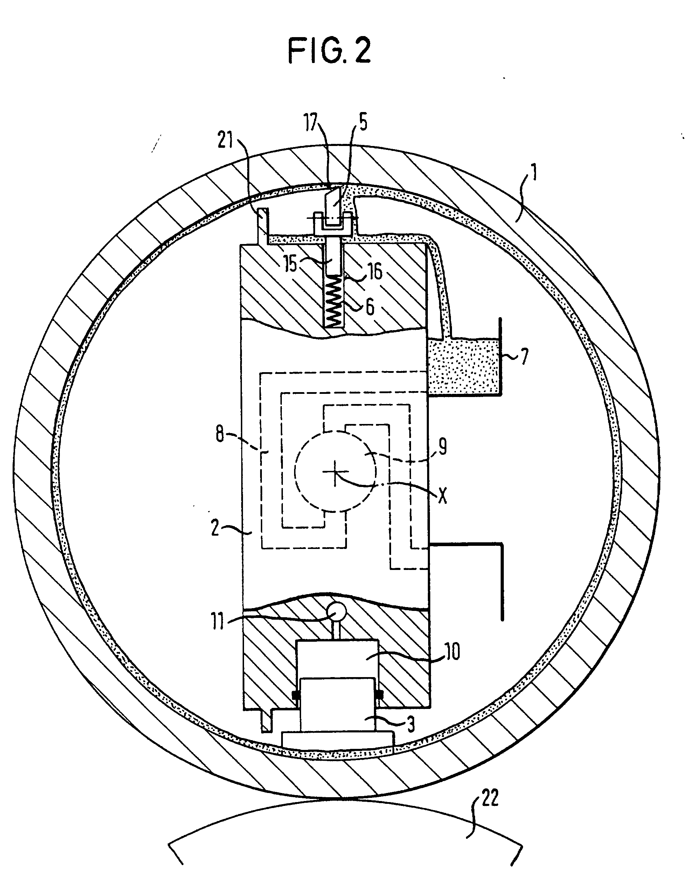

Wenn die Walze als Oberwalze verwendet wird, wie dies in Figur 2 dargestellt ist, sind die Fluidabstreifelemente 4 unwirksam und erstrecken sich von der dem Fluid abgewandten Rückseite der Stützelemente 3 etwa in Strömungsrichtung, so daß durch sie kaum Fluid vom Walzenmantel 1 abgestriffen wird und sie lediglich zur Kanalisierung des zwischen den Stützelementen 3 durchströmenden Fluids dienen, wie dies in Figur 4 dargestellt ist. Demgegenüber befinden sich die Schaberelemente 5 in ihrer wirksamen Stellung, um die zwischen den Stützelementen 3 kanalisierten Fluidringe vom Walzenmantel 1 abzustreifen.

Den Schaberelementen 5 ist ebenfalls eine Fluidaufnahme 7 zugeordnet, welche das abgestriffene Fluid auffängt. Die Fluidaufnahme 7 ist über eine in deren Boden mündende Abführleitung 8 mit der im Joch 2 vorgesehenen zentralen Austragsleitung 9 verbunden, die tiefer liegt als die Fluidaufnahme 7, so daß das Fluid allein aufgrund des hydrostatischen Drucks bzw. Schwerkraft abfließen kann. Ein Absaugen ist damit in der Regel nicht erforderlich.

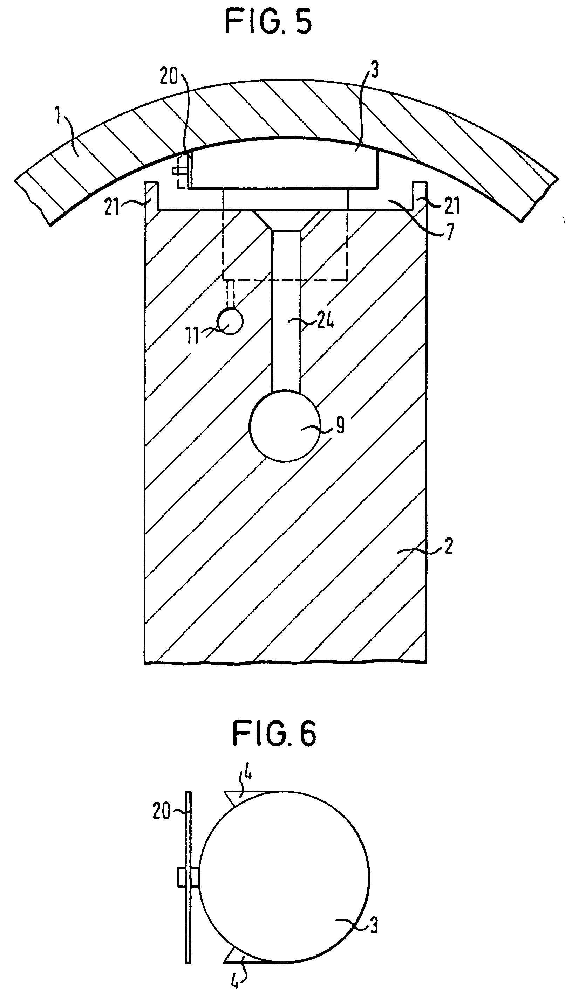

Wie in den Figuren 5 und 6 dargestellt ist, kann es vorteilhaft sein, den Fluidabstreifelementen 4, aber auch den Schaberelementen 5, jeweils Luftablenkbleche 20 vorzuschalten, die mit dem Walzenmantel 1 jeweils einen Spalt bilden, der so bemessen ist, daß zwar vom Walzenmantel 1 mitgerissenes Betriebsfluid durch den Spalt strömen kann, aber nur wenig Grenzschichtluft. Hierdurch wird erreicht, daß das von den Fluidabstreifelementen 4 bzw. den Schaberelementen 5 abgestriffene Fluid ruhig abfließen kann. Der Abstand zwischen Luftablenkblech 20 und Innenumfang des Walzenmantels 1 ist vorzugsweise kleiner als 5 mm.

Bei der in Figur 5 dargestellten Ausführungsform ist die Fluidaufnahme 7 außerdem zwischen zwei an der Oberseite des Jochs 2 vorgesehenen Leisten 21 gebildet, um Fluid, das von den an der Oberseite des Jochs 2 vorgesehenen Fluidabstreifelementen 4 bzw. Schaberelementen 5 abgestreift wird, aufzufangen. Die Fluidaufnahme 7 ist über eine Falleitung 24 mit dem zentralen Austragskanal 9 verbunden, um das in der Fluidaufnahme 7 gesammelte Fluid aus der Walze herauszuführen.

### Bezugszeichenliste

- 1: Walzenmantel
- 2: Joch
- 3: Stützelement
- 4: Fluidabstreichelement
- 5: Schaberelement
- 6: Druckfeder
- 7: Fluidaufnahme
- 8: Abführleitung
- 9: zentrale Äustragsleitung
- 10: Druckkammer
- 11: Versorgungsleitung
- 12: Drucktasche
- 13: Leitung
- 14: Gleitfläche
- 15: Stößel
- 16: Aufnahme
- 17: Schrägfläche
- 18: Fluidaufnahme
- 19: Kanal
- 20: Luftablenkblech
- 21: Leisten
- 22: Gegenwalze
- 23: Steg
- 24: Falleitung

- a: Abstand zwischen Stützelementen
- 1: Länge der Schaberelemente
- B: Achse
- F: Fluid
- R: Drehrichtung
- T: Teilung
- X: Walzenachse

## Patentansprüche

1. Durchbiegungseinstellwalze mit einem umlaufenden Walzenmantel (1), einem den Walzenmantel (1) axial durchsetzenden Joch (2) und mehreren in Axialrichtung der Walze mit Abstand (a) nebeneinanderliegenden hydrostatischen und / oder hydrodynamischen Stützelementen (3), durch die der Walzenmantel (1) am Joch (2) unter Ausbildung eines dazwischen liegenden Fluidpolsters abgestützt ist, wobei eine Flüssigkeitsabführeinrichtung vorgesehen ist, um Betriebsfluid, insbesondere Schmiermittel, das sich im Betrieb im Walzeninneren sammelt und einen die Stützelemente (3) umströmenden Fluidring am Innenumfang des Walzenmantels (1) bildet, aus dem Walzeninneren zu entfernen, **dadurch gekennzeichnet,**
**daß** zu der Flüssigkeitsabführeinrichtung mehrere an den Stützelementen (3) ausgebildete Fluidabstreifelemente (4) gehören, die seitlich von dem jeweiligen Stützelement (3) in Richtung eines benachbarten Stützelements (3) abragen, in den zwischen den Stützelementen (3) gebildeten Strömungskanälen das die Stützelemente (3) umströmende Fluid vom Walzenmantel () abstreifen und die Fluidabstreifelemente (4) zumindest teilweise derart angeordnet und / oder ausgebildet sind, daß sie nur bei einer Drehung des Walzenmantels (1) in einer Richtung wirksam sind, während sie bei sich in der entgegengesetzten Richtung drehendem Walzenmantel (1) im wesentlichen unwirksam bleiben.

2. Durchbiegungs einstellwalze nach Anspruch 1,
**dadurch gekennzeichnet,**
**daß** bei runden Stützelementen (3) die Fluidabstreifelemente (4) jeweils etwa radial von den Stützelementen (3) abragen, wobei sie jeweils in dem dem umströmenden Fluidring zugewandten vorderen Bereich der Stützelemente (3) liegen und dem Fluidring entgegengerichtet sind, wenn sie wirksam sind, und jeweils in dem dem umströmenden Fluidring abgewandten hinteren Bereich der Stützelemente (3) liegen und in Strömungsrichtung des Fluids gerichtet sind, wenn sie unwirksam sind.

3. Durchbiegungseinstellwalze nach Anspruch 2,
**dadurch gekennzeichnet,**
**daß** die Spitzen der Fluidabstreifelemente (4) mit dem jeweiligen Stützelement (3) jeweils durch einen etwa in Strömungsrichtung verlaufenden Verstärkungssteg (23) verbunden sind, um den Strömungswiderstand der Fluidabstreifelemente (4) zu verringern, wenn sie unwirksam sind.

4. Durchbiegungseinstellwalze nach Anspruch 3,
**dadurch gekennzeichnet,**
**daß** die Verstärkungsstege (23) jeweils von den Spitzen der Fluidabstreifelemente (4) ausgehend etwa tangential an den Umfang der Stützelemente (3) anschließen.

5. Durchbiegungseinstellwalze nach einem der Ansprüche 1 bis 4,
**dadurch gekennzeichnet,**
**daß** an den Stützelementen (3) jeweils zwei Fluidabstreifelemente (4) ausgebildet sind, die auf gegenüberliegenden Seiten des jeweiligen Stützelements (3) angeordnet sind.

6. Durchbiegungseinstellwalze nach Anspruch 5,
**dadurch gekennzeichnet,**
**daß** Fluidabstreifelemente (4) an den Stützelementen (3) jeweils symmetrisch zu der quer zur Walzenachse (X) verlaufenden Radialebene durch die Mittelachse des jeweiligen Stützelements (3) ausgebildet sind.

7. Durchbiegungseinstellwalze nach einem der Ansprüche 1 bis 6
**dadurch gekennzeichnet,**
**daß** die Fluidabstreifelemente (4) zumindest teilweise derart angeordnet und / oder ausgebildet sind, daß sie nur bei einer Verwendung der Durchbiegungseinstellwalze als Unterwalze wirksam sind, d.h. wenn die Stützelemente (3) und damit die Fluidabstreifelemente (4) in der oberen Walzenhälfte liegen, während sie bei einer Verwendung der Durchbiegungseinstellwalze als Oberwalze, d.h. wenn die Stützelemente (3) und damit die Fluidabstreifelemente (4) in der unteren Walzenhälfte liegen, unwirksam bleiben.

8. Durchbiegungseinstellwalze nach einem der Ansprüche 1 bis 7,
**dadurch gekennzeichnet,**
**daß** am Innenumfang des Walzenmantels (1) über dessen axiale Länge verteilt Schaberelemente (5) vorgesehen sind, die bezüglich der Stützelemente (3) auf Lücke angeordnet sind, um zwischen den Stützelementen (3) durchströmendes Fluid vom Innenumfang des Walzenmantels abzustreifen, zumindest wenn die Fluidabstreifelemente (4) unwirksam sind.

9. Durchbiegungseinstellwalze nach Anspruch 8,
**dadurch gekennzeichnet,**
**daß** die axiale Länge (l) der Schaberelemente (5) wenigstens gleich dem Abstand (a), vorzugsweise größer als der Abstand (a) zwischen den Stützelementen (3) ist.

10. Durchbiegungseinstellwalze nach Anspruch 8 oder 9,
**dadurch gekennzeichnet,**
**daß** wenigstens eines der Schaberelemente (5) derart ausgebildet ist, daß sich zwischen dem Innenumfang des Walzenmantels (1) und dem gegen diesen gehaltenen Schaberelement (5) ein Keilspalt ergibt, so daß das Fluidabstreifelement (5) nur bei sich in einer Richtung drehendem Walzenmantel (1) wirksam ist, während es bei sich in der entgegengesetzten Richtung drehendem Walzenmantel (1) aufgrund des durch den Keilspalt bewirkten hydrodynamischen Effekts Fluid durchläßt.

11. Durchbiegungseinstellwalze nach einem der Ansprüche 8 bis 10,
**dadurch gekennzeichnet,**
**daß** wenigstens eines der Schaberelemente (5) durch eine am Joch (2) abgestützte Druckfeder (6) gegen den Innenumfang des Walzenmantels (1) gedrückt wird.

12. Durchbiegungseinstellwalze nach einem der vorhergehenden Ansprüche,
**dadurch gekennzeichnet,**
**daß** den Fluidabstreifelementen (4) und / oder den Schaberelementen (5) wenigstens eine Fluidaufnahme (7) für einen schwerkraftunterstützten Fluidaustrag zugeordnet ist.

13. Durchbiegungseinstellwalze nach Anspruch 12,
**dadurch gekennzeichnet,**
**daß** die Fluidaufnahme (7) zwischen zwei an der Oberseite des Jochs (2) vorgesehenen Leisten (21) gebildet ist und Fluid, das von den an der Oberseite des Jochs (2) vorgesehenen Fluidabstreifelementen (4) bzw. Schaberelementen (5) abgestreift wird, auffängt.

14. Durchbiegungseinstellwalze nach einem der Ansprüche 1 bis 13,
**dadurch gekennzeichnet,**
**daß** den Fluidabstreifelementen (4) und / oder den Schaberelementen (5) wenigstens ein Luftablenkblech (20) vorgeschaltet ist, das mit dem Walzenmantel (1) einen Spalt bildet, der so bemessen ist, daß das vom Walzenmantel (1) mitgerissene Betriebsfluid hindurchgeht, jedoch nur wenig Grenzschichtluft, die innerhalb des Betriebsfluids von dem Walzenmantel (1) mitgerissen wurde.

15. Durchbiegungseinstellwalze nach Anspruch 14,
**dadurch gekennzeichnet,**
**daß** der Spalt kleiner als 5mm ist.

## Claims

1. Controlled deflection roll comprising a revolving roll shell (1), a yoke (2) passing axially through the roll shell (1) and a plurality of hydrostatic and/or hydrodynamic supporting elements (3) which are located beside one another at a distance (a) in the axial direction of the roll and by means of which the roll shell (1) is supported on the yoke (2), forming a fluid cushion located in between, a fluid discharge device being provided in order to remove from the interior of the roll operating fluid, in particular lubricant, which collects in the interior of the roll during operation and forms a fluid ring flowing around the supporting elements (3) on the inner circumference of the roll shell (1), **characterized in that** the fluid discharge device includes a plurality of fluid wiping elements (4) which are formed on the supporting elements (3), project laterally from the respective supporting element (3) in the direction of an adjacent supporting element (3) and wipe off the fluid flowing around the supporting elements (3) from the roll shell (1) in the flow channels formed between the supporting elements (3), and the fluid wiping elements (4) are, at least to some extent, arranged and/or formed such that they are active only during rotation of the roll shell (1) in one direction, while they remain substantially inactive when the roll shell (1) rotates in the opposite direction.

2. Controlled deflection roll according to Claim 1, **characterized in that**, in the case of round supporting elements (3), the fluid wiping elements (4) in each case project approximately radially from the supporting elements (3), being respectively located in the front region of the supporting elements (3), facing the fluid ring flowing around, and being oriented counter to the fluid ring when they are active, and in each case being respectively located in the rear region of the supporting elements (3), facing away from the fluid ring flowing around, and being oriented in the flow direction of the fluid when they are inactive.

3. Controlled deflection roll according to Claim 2, **characterized in that** the tips of the fluid wiping elements (4) are connected to the respective supporting elements (3) in each case by a reinforcing web (23) which runs approximately in the flow direction, in order to reduce the flow resistance of the fluid wiping elements (4) when they are inactive.

4. Controlled deflection roll according to Claim 3, **characterized in that** the reinforcing webs (23) adjoin the circumference of the supporting elements (3) approximately tangentially, in each case starting from the tips of the fluid wiping elements (4).

5. Controlled deflection roll according to one of Claims 1 to 4, **characterized in that** on the supporting elements (3) there are in each case formed two fluid wiping elements (4), which are arranged on opposite sides of the respective supporting element (3).

6. Controlled deflection roll according to Claim 5, **characterized in that** fluid wiping elements (4) are formed on the supporting elements (3) in each case symmetrically with respect to the radial plane running transversely to the roll axis (X) through the mid-axis of the respective supporting element (3).

7. Controlled deflection roll according to one of Claims 1 to 6, **characterized in that** the fluid wiping elements (4) are, at least to some extent, arranged and/or formed in such a way that they are active only when the controlled deflection roll is used as a bottom roll, that is to say when the supporting elements (3) and therefore the fluid wiping elements (4) are located in the upper roll half, while they remain inactive when the controlled deflection roll is used as a top roll, that is to say when the supporting elements (3) and therefore the fluid wiping elements (4) are located in the lower roll half.

8. Controlled deflection roll according to one of Claims 1 to 7, **characterized in that** scraper elements (5) are provided on the inner circumference of the roll shell (1), distributed over its axial length, and are arranged offset with respect to the supporting elements (3), in order to wipe off fluid flowing through between the supporting elements (3) from the inner circumference of the roll shell, at least when the fluid wiping elements (4) are inactive.

9. Controlled deflection roll according to Claim 8, **characterized in that** the axial length (1) of the scraper elements (5) is at least equal to the distance (a), preferably greater than the distance (a), between the supporting elements (3).

10. Controlled deflection roll according to Claim 8 or 9, **characterized in that** at least one of the scraper elements (5) is formed in such a way that, between the inner circumference of the roll shell (1) and the scraper element (5) held against the latter, the result is a wedge-shaped gap, so that the fluid wiping element (5) is active only when the roll shell (1) rotates in one direction, while, when the roll shell (1) rotates in the opposite direction, it lets fluid through because of the hydrodynamic effect effected by the wedge-shaped gap.

11. Controlled deflection roll according to one of Claims 8 to 10, **characterized in that** at least one of the scraper elements (5) is pressed against the inner circumference of the roll shell (1) by a compression spring (6) supported on the yoke (2).

12. Controlled deflection roll according to one of the preceding claims, **characterized in that** the fluid wiping elements (4) and/or the scraper elements (5) are assigned at least one fluid holder (7) for gravity-assisted fluid discharge.

13. Controlled deflection roll according to Claim 12, **characterized in that** the fluid holder (7) is formed between two strips (21) provided on the upper side of the yoke (2) and catches fluid which is wiped off the fluid wiping elements (4) or scraper elements (5) provided on the upper side of the yoke (2).

14. Controlled deflection roll according to one of Claims 1 to 13, **characterized in that**, upstream of the fluid wiping elements (4) and/or the scraper elements (5), there is provided at least one air deflection plate (20) which, with the roll shell (1), forms a gap which is dimensioned such that the operating fluid entrained by the roll shell (1) passes through but only little of the boundary air layer which has been entrained by the roll shell (1) within the operating fluid.

15. Controlled deflection roll according to Claim 14, **characterized in that** the gap is smaller than 5 mm.

## Revendications

1. Rouleau avec compensation de la déflection, comprenant une enveloppe de rouleau périphérique (1), une culasse (2) traversant axialement l'enveloppe de rouleau (1) et plusieurs éléments de support (3) hydrostatiques et/ou hydrodynamiques placés les uns à côtés des autres avec un écartement (a) dans la direction axiale du rouleau, par lesquels l'enveloppe de rouleau (1) est supportée sur la culasse (2) en formant un coussin de fluide interposé, un dispositif d'évacuation de liquide étant prévu pour évacuer de l'intérieur du rouleau le fluide de travail, en particulier du lubrifiant, qui s'accumule en fonctionnement à l'intérieur du rouleau et qui forme un anneau de fluide circulant autour des éléments de support (3) sur la périphérie intérieure de l'enveloppe du rouleau (1),
**caractérisé en ce que**
plusieurs éléments de raclage de fluide (4) réalisés sur les éléments de support (3) appartiennent au dispositif d'évacuation de liquide, ceux-ci dépassant latéralement de l'élément de support respectif (3) dans la direction d'un élément de support voisin (3), raclant le fluide de l'enveloppe de rouleau (1) circulant autour des éléments de support (3) dans les canaux d'écoulement formés entre les éléments de support (3) et les éléments de raclage de fluide (4) étant disposés et/ou réalisés au moins partiellement de telle sorte qu'ils sont actifs dans une direction lors d'une rotation de l'enveloppe de rouleau (1) tandis qu'ils sont essentiellement inactifs lorsque l'enveloppe de rouleau (1) tourne dans le sens opposé.

2. Rouleau avec compensation de la déflection selon la revendication 1, **caractérisé en ce que** dans le cas d'éléments de support ronds (3), les éléments de raclage de fluide (4) dépassent à chaque fois approximativement radialement des éléments de support (3), et se trouvent à chaque fois dans la région avant des éléments de support (3) tournée vers l'anneau de fluide en circulation et étant orientés dans le sens opposé à l'anneau de fluide, lorsqu'ils sont actifs, et se trouvant à chaque fois dans la région arrière des éléments de support (3) opposée à l'anneau de fluide en circulation et étant orientés dans le sens d'écoulement du fluide lorsqu'ils ne sont pas actifs.

3. Rouleau avec compensation de la déflection selon la revendication 2,
**caractérisé en ce que**
les pointes des éléments de raclage de fluide (4) sont connectées à l'élément de support respectif (3) à chaque fois par une nervure de renforcement (23) s'étendant approximativement dans le sens de l'écoulement, afin de réduire la résistance à l'écoulement des éléments de raclage de fluide (4) lorsqu'ils ne sont pas actifs.

4. Rouleau avec compensation de la déflection selon la revendication 3,
**caractérisé en ce que**
les nervures de renforcement (23) se raccordent à chaque fois depuis les pointes des éléments de raclage de fluide (4) approximativement tangentiellement à la périphérie des éléments de support (3).

5. Rouleau avec compensation de la déflection selon l'une quelconque des revendications 1 à 4,
**caractérisé en ce que**
deux éléments de raclage de fluide (4) respectifs sont réalisés sur les éléments de support (3), et sont disposés sur des côtés opposés de l'élément de support respectif (3).

6. Rouleau avec compensation de la déflection selon la revendication 5,
**caractérisé en ce que**
les éléments de raclage de fluide (4) sur les éléments de support (3) sont réalisés à chaque fois symétriquement par rapport au plan radial s'étendant transversalement à l'axe du rouleau (X) à travers l'axe médian de l'élément de support (3) respectif.

7. Rouleau avec compensation de la déflection selon l'une quelconque des revendications 1 à 6,
**caractérisé en ce que**
les éléments de raclage de fluide (4) sont disposées et/ou réalisés au moins partiellement de telle sorte qu'ils soient actifs seulement dans le cas d'une utilisation du rouleau avec compensation de la déflection en tant que rouleau inférieur, c'est-à-dire lorsque les éléments de support (3) et de ce fait les éléments de raclage de fluide (4) se trouvent dans la moitié de rouleau supérieure, tandis qu'ils restent inactifs dans le cas d'une utilisation du rouleau avec compensation de la déflection en tant que rouleau supérieur, c'est-à-dire lorsque les éléments de support (3) et donc les éléments de raclage de fluide (4) se trouvent dans la moitié de rouleau inférieure.

8. Rouleau avec compensation de la déflection selon l'une quelconque des revendications 1 à 7,
**caractérisé en ce que**
sur la périphérie intérieur de l'enveloppe de rouleau (1), on prévoit des éléments de raclette (5) répartis sur sa longueur axiale, lesquels sont disposés par rapport aux éléments de support (3) sur des espaces vides afin de racler le fluide s'écoulant entre les éléments de support (3) depuis la périphérie interne de l'enveloppe de rouleau, au moins lorsque les éléments de raclage de fluide (4) sont inactifs.

9. Rouleau avec compensation de la déflection selon la revendication 8,
**caractérisé en ce que**
la longueur axiale (1) des éléments de raclette (5) est au moins égale à l'écartement (a), de préférence est supérieure à l'écartement (a) entre les éléments de support (3).

10. Rouleau avec compensation de la déflection selon la revendication 8 ou 9,
**caractérisé en ce que**
au moins l'un des éléments de raclette (5) est réalisé de telle sorte qu'il se forme entre la périphérie interne de l'enveloppe de rouleau (1) et l'élément de raclette (5) maintenu contre celle-ci une fente en coin de sorte que l'élément de raclage de fluide (5) ne soit actif que lorsque l'enveloppe de rouleau (1) tourne dans une direction tandis qu'il laisse passer le fluide lorsque l'enveloppe de rouleau (1) tourne dans le sens opposé en raison de l'effet hydrodynamique provoqué par la fente en coin.

11. Rouleau avec compensation de la déflection selon l'une quelconque des revendications 8 à 10,
**caractérisé en ce que**
au moins l'un des éléments de raclette (5) est pressé par un ressort de compression (6) supporté sur la culasse (2) contre la périphérie interne de l'enveloppe de rouleau (1).

12. Rouleau avec compensation de la déflection selon l'une quelconque des revendications précédentes,
**caractérisé en ce que**
au moins une collecte de fluide (7) pour une décharge de fluide supportée par la force de pesanteur est associée aux éléments de raclage de fluide (4) et/ou aux éléments de raclette (5).

13. Rouleau avec compensation de la déflection selon la revendication 12,
**caractérisé en ce que**
la collecte de fluide (7) est formée entre deux baguettes (21) prévues sur le côté supérieur de la culasse (2) et recueille le fluide, qui est raclé par les éléments de raclage de fluide (4) ou les éléments de raclette (5) prévus sur le côté supérieur de la culasse (2).

14. Rouleau avec compensation de la déflection selon l'une quelconque des revendications 1 à 13,
**caractérisé en ce que**
au moins une tôle de déflection d'air (20) est montée avant les éléments de raclage de fluide (4) et/ou les éléments de raclette (5), celle-ci formant avec l'enveloppe de rouleau (1) une fente qui est dimensionnée de telle sorte que le fluide de travail entraîné par l'enveloppe de rouleau (1) passe à travers elle, mais seulement peu d'air de couche limite, qui a été entraîné à l'intérieur du fluide de travail par l'enveloppe de rouleau (1).

15. Rouleau avec compensation de la déflection selon la revendication 14,
**caractérisé en ce que**
la fente est inférieure à 5 mm.
